# EUROPÄISCHE PATENTSCHRIFT

(11) **EP 0 523 115 B1**
(45) Veröffentlichungstag und Bekanntmachung des Hinweises auf die Patenterteilung: **08.03.1995**
(21) Anmeldenummer: 91907003.7
(22) Anmeldetag: 29.03.1991
(51) Int. Cl.: B60T 1/06, B60T 13/22

(54) **BREMSANLAGE, UND FEDERSPEICHER HIERZU**
BRAKE SYSTEM AND SPRING-BRAKE ACTUATOR THEREFOR
SYSTEME DE FREINAGE ET RESSORT ACCUMULATEUR A CET EFFET

(30) Priorität: 02.04.1990 DE 4010547; 06.04.1990 DE 4011164
(43) Veröffentlichungstag der Anmeldung: 20.01.1993
(73) Patentinhaber: ITT Automotive Europe GmbH, 60488 Frankfurt (DE)
(72) Erfinder: WEILER, Rolf, D-6239 Eppstein 2 (DE); HABERLAND, Wilhelm, D-6000 Frankfurt am Main 90 (DE); KRISTEN, Dieter, D-6070 Langen (DE); MEHNER, Götz, D-6108 Weiterstadt (DE)
(86) Internationale Anmeldenummer: EP9100613
(87) Internationale Veröffentlichungsnummer: WO9115384

(56) Entgegenhaltungen:
- EP-A- 0 056 779
- EP-A- 0 116 134
- EP-A- 0 260 100
- DE-A- 2 325 848
- DE-A- 3 343 596
- DE-A- 3 723 683
- GB-A- 2 030 651

## Beschreibung

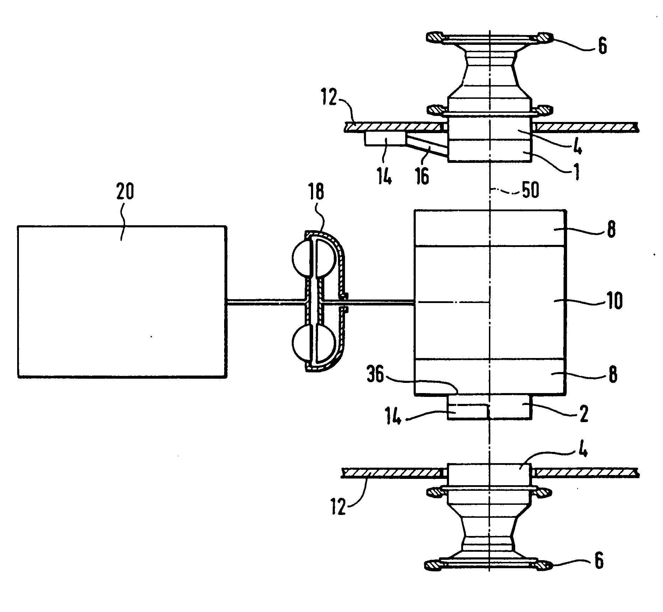

Die Erfindung betrifft eine Bremsanlage, insbesondere für Kettenfahrzeuge sowie einen Federspeicher hierzu. Bei einer derartigen Bremsanlage ist es bekannt, die Bremse selbst mit dem Getriebeblock zu verschrauben. Andererseits benötigen derartige Bremsanlagen einen Federspeicher. Bei den bekannten Bremsanlagen ist der Federspeicher bisher getrennt von der Bremse und auch getrennt von dem Getriebeblock an der Wanne des Kettenfahrzeugs montiert. Die notwendige Krafteinwirkung von dem Federspeicher auf die Bremse geschieht mit Hilfe einer zusätzlichen Kraftumlenkeinheit. Die bekannte Anordnung ist schematisch in der oberen Hälfte von Fig. 1 dargestellt.

Die Montage der bekannten Bremsanlage geschieht wie folgt:
Der Federspeicher 14 wird mit einem Lagerbock vormontiert. Der Kraftfahrzeug-Hersteller befestigt weiterhin die vom Federspeicher getrennte Bremse am Getriebeblock, vorzugsweise, wie in Fig. 1 oben gezeigt, am Seitenvorgelege. Weiterhin wird die vormontierte Federspeicher-Lagerbock-Einheit durch den Hersteller an der Fahrzeugwanne des Kettenfahrzeuges zur Bremse ausgerichtet und montiert. Da der an der starren Wanne befestigte Federspeicher erheblichen Schlägen und Schwingungen ausgesetzt ist, kann um den Federspeicher zusätzlich noch ein Spannband gezogen werden, welches über eine Halterung mit der Fahrzeugwanne verschweißt wird.

Durch die bekannte Konstruktion ergeben sich eine Reihe von Nachteilen. Durch die über die Wanne direkt auf den Federspeicher ausgeübten Schläge und Schwingungen kann der Federspeicher in seiner Arbeitsweise gehindert werden, was bis zum Ausfall des Federspeichers, Abbrechen des Lagerbocks oder Reißen des Spannbandes führen kann. Die Verwendung des Spannbandes führt zu zusätzlichen Kosten. Entsprechendes gilt für die notwendige Kraftumlenkeinheit 16. Die Ausrichtung und Verbindung der Elemente beim Hersteller des Fahrzeugs kann aufgrund der fehlenden Spezialisierung ebenfalls zu Schwierigkeiten führen.

Aus der DE-A-3 343 596 ist eine Bremsanlage bekannt, bei der die Bremse mit dem Getriebeblock verschraubt ist. Ein Federspeicher ist ebenfalls in den Getriebeblock integriert und im Inneren des Gehäuses angeordnet. Da der Federspeicher baulich mit der Bremse eine Einheit bildet, wobei die Bauelemente nicht mehr eindeutig getrennt zugeordnet werden können, ist ein Betätigungshebel der Bremse zur Betätigung durch den Federspeicher nicht vorgesehen.

Aus der EP-A-0 056 779 ist eine Bremsanlage bekannt, bei der ein Federspeicher direkt mit einem Reibelement verbunden ist, welches durch den Federspeicher radial gegen den äußeren Rand der Scheibe angedrückt werden kann. Auch bei dieser bekannten Bremsanlage wirkt der Federspeicher direkt als Bremse, welche selbst keinen Betätigungshebel benötigt.

Aus der DE-A-2 325 848 ist schließlich ein Federspeicher bekannt, bei dem ein Einsatz und ein offener Zylinder baulich zu einem einstückigen Einsatzzylinder verbunden und derart lösbar in den Federtopf eingesetzt sind, daß durch den Einsatzzylinder gehalten, alle hydraulisch betätigbaren Baugruppen mit dem Einsatzzylinder gemeinsam aus dem Federspeichergehäuse herausnehmbar sind.

Die vorliegende Erfindung geht daher aus von einer Bremsanlage, der sich aus dem Oberbegriff des Anspruchs 1 ergebenden Gattung und hat sich zur Aufgabe gestellt, eine derartige Bremsanlage preiswerter und montagefreundlicher zu machen.

Die Aufgabe wird durch die sich aus dem kennzeichnenden Teil des Hauptanspruchs aufgeführte Merkmalskombination gelöst.

Aus dem Prinzip, das Gehäuse des Federspeichers mit dem Gehäuse der Bremse baulich zu vereinen und auf eine abgesetzte Befestigung des Federspeichers an der Wanne zu verzichten, ergeben sich eine ganze Reihe von Vorteilen. Das Federspeichergehäuse vereinigt die Funktionen Aufnahme der Federspeicherkomponenten, Befestigung des Federspeichers an der Bremse und Übertragung der Federspeicherreaktionskräfte in das Bremsengehäuse. Es wird nur noch eine einzige mechanische Schnittstelle für die Verbindung zwischen Bremse und Fahrzeug benötigt, so daß die Gefahr von Fehlmontagen gering ist.

Durch die Erfindung wird nun ein direkter Kraftfluß innerhalb der Bremsanlage erreicht, an dem keine anderen Fahrzeugbestandteile mehr beteiligt sind, so daß auf die bekannte Kraftumlenkeinheit 16 verzichtet werden kann. Die gesamte Bremsanlage, insbesondere der Federspeicher, ist nunmehr mit dem Kraftfahrzeuggetriebe, vorzugsweise wie in Fig. 1 unten dargestellt ist, dem Lenkgetriebe baulich vereint (z.B. verschraubt) und damit im Vergleich zur Befestigung an der Wanne bzw. einer Abstützung an dem Vorgelege gegenüber den Schwingungen und Schlägen der Wanne gedämpft.

In vorteilhafter Weiterbildung der Erfindung empfielt sich die Verwendung der Merkmalskombination nach Anspruch 2. Es greift also nicht mehr ein Kraftumlenkhebel in eine entsprechende kraftübertragende Nut in der Kugeldruckplatte ein, sondern es ist ein Hebelansatz an der Kugeldruckplatte vorgesehen, der einstückig mit ihr verbunden und ggf. angegossen sein kann. Dieser Hebelansatz ist in Form eines Drehhebels direkt mit dem Stößel des Federspeichers verbunden, so daß keine Kraftumlenkeinheit mehr benötigt wird.

Die Ausgestaltung des Drehgelenks geschieht vorzugsweise gemäß den Merkmalen nach Anspruch 3.

Während die eine Seitenfläche des im wesentlichen einen flachen Zylinder bildenden Bremsengehäuses mit dem Getriebeblock, insbesondere mit dem Lenkgetriebe verschraubt ist, empfiehlt sich in Weiterbildung der Erfindung, insbesondere für die dem Getriebe zugewandten Seite des Bremsgehäuses die Verwendung einer Merkmalskombination nach Anspruch 4. Hierdurch wird in einfacher Weise das Bremsgehäuse versteift, während gleichzeitig die Rippen durch eine Vergrößerung der wärmeabstrahlenden und ggf. belüfteten Bremsengehäusefläche für eine verbesserte Wärmeabfuhr sorgen.

Um Gewicht zu sparen, empfiehlt sich in Weiterbildung der Erfindung eine Merkmalskombination nach Anspruch 5, da hierdurch nur die zur Schraubbefestigung notwendigen Bereiche des Bremsengehäuses eine für ein Gewinde geeignete Dicke haben müssen, während im übrigen die Stärke nur durch die durch den Bremsvorgang aufzunehmenden Kräfte bestimmt ist.

Um den Montagevorgang, insbesondere das Ausrichten des Federspeichers gegenüber dem Bremsengehäuse zu erleichtern, empfiehlt sich die Anwendung der Merkmalskombination nach Anspruch 7. Die Verwendung der Merkmale nach Anspruch 6 führt zu einer weiteren Einsparung des für die Bremsanlage benötigten Platzes.

Da auch der Getriebeblock mit dem Motorblock noch zu einem Stück vereint ist, erhält man insgesamt den Vorteil, daß die Einheit aus Getriebe, Motor und Bremse des Kettenfahrzeugs nur an drei Lagerstellen an der Wanne gehalten werden müssen, wobei zwei davon direkt an den beiden Bremsgehäusen befestigt sind. Hinsichtlich Reparaturarbeiten bedeutet dies, daß die komplette Einheit aus Motor, Getriebe und Bremsanlage in einem Stück aus der Wanne gezogen werden kann, wobei nur mechanische Übertragungselemente, wie beispielsweise zum Fahrerstand gehende Seilzüge, abgekoppelt werden müssen. Da hingegen die hydraulischen Leitungen, die z.B. zum Retarder führen, nicht mehr abgetrennt werden müssen, ergeben sich durch diese Montageweise auch keine Störungsprobleme durch Lufteinschlüsse bei Wiederinbetriebnahme, was auch für die Arbeitsweise der Bremsanlage gilt. Durch die Verbindung zwischen Federspeicher und Bremse ist es weiterhin möglich, die gesamte Bremsanlage durch die Serviceluke für die Antriebseinheit herauszuheben.

Eine Verbesserung der Erfindung ist weiterhin durch die Verwendung der Merkmale nach Anspruch 8 gegeben. Das Bremsgehäuse dient so zur Übertragung des Antriebseinheitsgewichts zu einer der Lagerstellen. Diese Lagerstellen werden dadurch für Montage bzw. Demontage der Antriebseinheit von außen gut und schnell zugänglich.

Eine weitere Verbesserung betrifft den Einsatz des verwendeten Federspeichers. Es empfiehlt sich gemäß Anspruch 9 einen Federspeicher zu verwenden, wie er aus der DE-OS 28 40 836 bekannt ist und diesen derart gemäß Anspruch 9 weiterzubilden, daß der Hydraulikteil ohne Schwierigkeit vom restlichen Teil abgebremst werden kann.

Der aus der DE-OS 28 40 836 bekannte Federspeicher besitzt eine große Anzahl hydraulisch betätigter und in ihrer Lage gegenseitig voneinander abhängiger Baugruppen, die zueinander gut abgedichtet sein müssen, damit die vorgesehenen, durch hydraulische Kräfte bedingten Reaktionen in Abhängigkeit von den Randbedingungen eintreten. Die einzelnen Baugruppen haben darüber hinaus noch relativ enge Toleranzen zueinander, die nicht in allen Fällen eingehalten werden.

Daraus ergibt sich die Tatsache, daß es durchaus vorkommen kann, daß aufgrund (nicht mehr) gegebener Toleranzen oder Dichtflächen die hydraulischen Teile früher oder später zu Reparatur- oder Korrekturzwecken ausgebaut werden müssen. Im Gegensatz zu dem Zusammenwirken der hydraulischen Baugruppen ist die Anordnung und die Wirkungsweise der Spannfeder in dem Federtopf recht einfach, so daß sie kaum zu Beanstandungen Anlaß geben wird.

Nachteilig bei dem bekannten Federspeicher ist es nun, daß für den Ausbau einer ganzen Reihe von Hydraulikeinbauten die Spannfeder gänzlich entspannt werden muß. Das bedeutet, daß die Spannfeder nicht nur in ihre halbentspannte Lage übergeht, die sie im Bremszustand des Federspeichers einnimmt, sondern sie darüber hinaus vollkommen entspannt werden muß. Ein derartiges Entspannen und nachträgliches Spannen der Spannfeder, um sie in ihre Bremslage zu bringen, bedeutet einen erheblichen Aufwand an Montage und darüber hinaus noch umfangreiches Werkzeug.

Eine weitere Verbesserung des Federspeichers hat sich nun zur Aufgabe gestellt, eine Möglichkeit zu schaffen, daß sämtliche hydraulische Baugruppen aus dem Federspeichergehäuse entnommen werden können, ohne daß die Speicherfeder hierzu vollkommen entspannt und danach wieder in ihre Bremslage gebracht werden muß.

Hierzu wird in Weiterbildung der Erfindung vorgeschlagen, die sich aus dem Anspruch 9 ergebende Merkmalskombination anzuwenden. Diese besteht im Prinzip also darin, eine durchgehende räumliche Trennung zwischen einer Grundeinheit, welche die vorgespannte Grundfeder aufnimmt und dem Hydraulikteil vorzunehmen, welcher alle hydraulisch betätigten Baueinheiten umfaßt. Durch den Einbau der vorgespannten Feder in eine separate Einheit kann jederzeit ohne großen Vorrichtungsaufwand der Hydraulikteil demontiert und ausgetauscht bzw. gewartet werden, ohne daß sich hierzu der Zustand der Feder innerhalb der Grundeinheit ändert, die im vorgespannten Zustand in dem Federtopf innerhalb des Federspeichergehäuses verbleibt. Hierdurch vermindern sich erheblich, andernfalls beim Austausch von anfälligen Hydraulikeinrichtungen ergebende Montageprobleme, da der Federspeicher beim Ausfall der Dichtungen nicht mehr wie bei dem bekannten Federspeicher unter einer Hydraulikpresse demontiert werden muß. Dabei darf man nicht übersehen, daß die Spannfeder des Federspeichers auch schon beim nur vorgespannten Zustand eine Kraft von mehreren Tonnen aufbringt, so daß, wie weiter oben schon erläutert, zum Entspannen der Feder sehr aufwendige Vorrichtungen, wie beispielsweise hydraulische Pressen, notwendig sind.

Ein besonders einfacher Aufbau des Federspeichers ergibt sich durch die Verwendung der Merkmalskombination nach Anspruch 10. Im Falle des Ausbaues der Hydraulikeinheit nimmt somit nach wie vor das Gehäuse des Federspeichers über seinen Anschlag die Kraft der vorgespannten Feder auf, so daß der Einsatzzylinder mit den hydraulischen Bauelementen ohne Federbelastung leicht nach dem Lösen der Verbindung aus dem Gehäuse, insbesondere dem Federtopf, herausgehoben werden kann. Dabei ist allerdings zu beachten, daß die über die Dichtung des Spannkolbens auf den Betätigungsstößel ausgeübte Haftreibung hinreichend groß ist, um den Betätigungsstößel gleichzeitig mit dem Einsatzzylinder herauszuziehen. Hierzu müssen also alle Elemente, die einer entsprechenden Bewegung des Betätigungsstößels, wie beispielsweise Schutzmanschetten u.ä. entgegenstehen, vor dem Herausnehmen des Einsatzzylinders entfernt werden.

Eine besonders einfache Befestigung des Einsatzzylinders an dem Federspeichergehäuse ergibt sich durch die in Anspruch 11 ausgeführte Merkmalskombination, bei der im Prinzip der Ansatz und der Anschlag lösbar miteinander verschraubt werden. In Weiterbildung hierzu empfiehlt sich die Merkmalskombination nach Anspruch 13, die zu einer verbesserten Dichtwirkung zwischen Einsatzzylinder und Speichergehäuse beiträgt.

Ein Ausführungsbeispiel der Erfindung wird nachfolgend anhand der Zeichnung erläutert.

Darin zeigt:
- Fig. 1: in der oberen Hälfte eine bisher verwendete Konstruktion, während in der unteren Hälfte die Aufteilung der erfindungsgemäßen Bremsanlage gezeigt ist,
- Fig. 2: in schematischer und teilweise aufgebrochener Darstellung die Befestigung des Federspeichers an dem Gehäuse der Bremse,
- Fig. 3: den Aufbau eines gleichgroßen Federspeichers.

In der oberen Hälfte von Fig. 1 ist ein bisher verwendeter Aufbau eines Kettenfahrzeugs in symbolischer Form angedeutet. Danach wirkt ein Motor 20 über einen Wandler 18 auf einen Getriebeblock 10, wobei der Getriebeblock 10 über eine Antriebsachse auf das ebenfalls zum Getriebe gehörende Seitenvorgelege 4 einwirkt. Die Antriebsachse 50 wirkt weiterhin auf die Kettenräder ein.

An dem Seitenvorgelege 4 ist bei der bisher verwendeten Konstruktion das Bremsgehäuse angeschraubt, während der zur Bremsanlage gehörende Federspeicher 14 über einen nicht dargestellten Lagerbock an der Wanne 12 angeschraubt ist. Wegen der großen mechanischen Belastung der Befestigung an der Wanne 12 ist der Federspeicher 14 zusätzlich noch über ein nicht dargetelltes Spannband mit der Wanne 12 verbunden. Über eine symbolisch dargestellte Kraftumlenkeinheit 16 wird die von dem Federspeicher 14 ausgehende Kraft auf die Bremse 1 am Seitenvorgelege 4 übertragen.

In dem unteren Teil sind die Abweichungen der erfindungsgemäßen Konstruktion gegenüber der bisherigen aus dem oberen Teil von Fig. 1 ersichtlichen Konstruktion zu ersehen. Der Federspeicher 14 ist an dem Gehäuse der Bremse 2 befestigt, wobei die Bremse 2 mit dem Getriebeblock 10 vorzugsweise dem Lenkgetriebe 8 verbunden ist. Wie aus Fig. 1 zu erkennen, kann hierdurch auf die Kraftumlenkeinheit 16 verzichtet werden. Es ist weiterhin möglich, die gesamte Antriebseinheit mit Bremsanlage aus der Serviceluke in der Wanne 12 herauszuziehen, soweit die Antriebsachsen 50 von der Antriebseinheit getrennt und die drei Lagerstellen gelöst wurden.

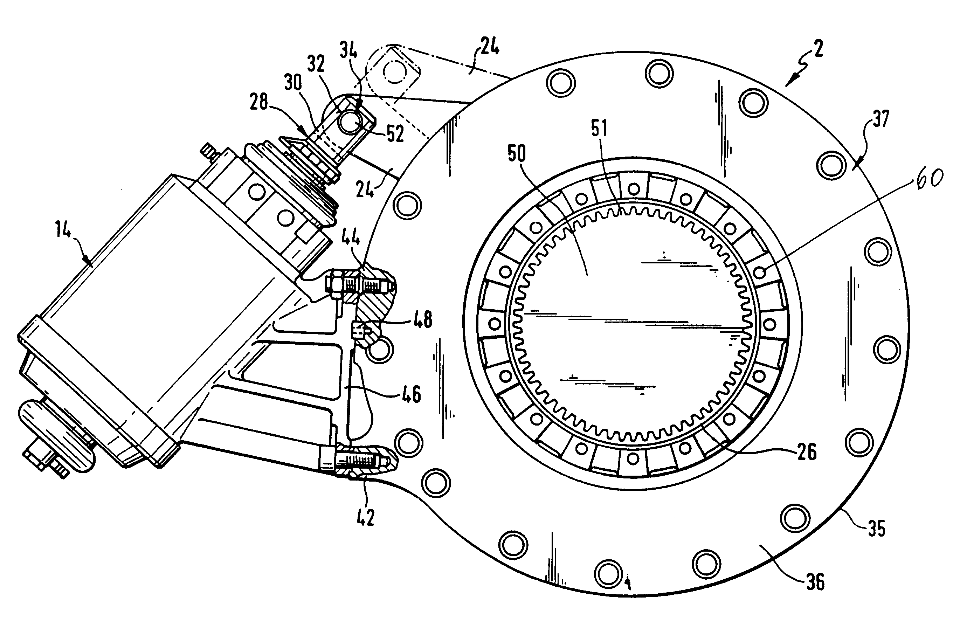

Weitere Einzelheiten der Erfindung lassen sich aus Fig. 2 erkennen. In Fig. 2 ist in Umrissen der Federspeicher 14 dargestellt, aus dem an seinem vorderen Ende ein zur Betätigung der Bremse dienender Stößel 28 ragt.

In der rechten Hälfte von Fig. 2 ist in Umrissen die Bremse 2 angedeutet. Dabei ist die Seitenfläche 36 des Bremsgehäuses 37 dargestellt, welche dem Lenkgetriebe abgewandt ist, also die in Fig. 1 untere Seite. Innerhalb der ringförmigen Seitenfläche 36 ist ein ringförmiger Teil der Bremsscheibe 26 zu erkennen. Die Bremsscheibe 26 wird angetrieben durch eine Antriebswelle 50, die über eine Verzahnung 51 mit der Bremsscheibe 26 verbunden ist. Der innere Aufbau der Bremse 2 ist nicht Gegenstand der vorliegenden Erfindung und soll daher nicht näher erläutert werden. Eine geeignete Vollscheibenbremse ist beispielsweise in der DE-OS 40 03 732 beschrieben, wobei diese Anmeldung hiermit zum Gegenstand der Offenbarung gemacht wird.

Die Vollscheibenbremse arbeitet im Prinzip derart, daß die Bremse 2 ein ringförmiges Gehäuse 37 besitzt, in der die Bremsscheibe 26 drehbar gelagert ist, während zumindest eine der beidseitig von der Bremsscheibe 26 angeordnete Belagscheiben gegenüber dem Gehäuse 37 drehfest, aber axial verschiebbar angeordnet ist. Eine zwischen einer Seitenfläche 36 des Bremsengehäuses 37 und einer Belagscheibe angeordnete Kugeldruckplatte wird verdreht durch den Federspeicher 14. Dadurch verschiebt die Belagscheibe ihre Lage axial gegenüber der Kugeldruckplatte. Die Bremse 2 wird also dann wirksam, wenn der Stößel 28 einen mit der Kugeldruckplatte einstückig verbundenen Betätigungshebel 24 in Fig. 2 in die gestrichelt dargestellte Lage verdreht, da hierdurch die beiden Belagscheiben über die Kugeldruckplatte gegen die axial verschieblich auf der Antriebsachse 50 gelagerte Bremsscheibe 26 pressen.

Für die Erfindung besonders wichtig ist die Befestigung des Federspeichers 14 über einen Lagerbock 46 an geeigneten Ansätzen 42,44 der Mantelfläche 35 des Bremsengehäuses 37. Dabei ist, wie in Fig. 2 in aufgeschnittener Darstellung erkennbar, der Lagerbock 46 über Schrauben mit entsprechenden Gewinden in den Ansätzen 42,44 verschraubt.

Um die Lage des Lagerbocks 46 und damit des Federspeichers 14 gegenüber dem Bremsgehäuse 37 zu justieren, sind sowohl in den Lagerbock 46, als auch in den Ansatz 44 entsprechende Nuten eingearbeitet, die zueinander zur Deckung gebracht werden und durch eine in die Nuten eingefügte Paßstift 48 zueinander ausgerichtet werden.

Die durch den Federspeicher 14 auf den Betätigungsstößel 28 ausgeübte Betätigungskraft wird auf die Kugeldruckplatte über der Betätigungshebel 24 direkt aufgebracht. Dabei besitzt der Stößel 28 eine mit zwei miteinander fluchtenden Löchern versehene Lochgabel 30, in die das Ende des Betätigungshebels 24 mit einem Ösenloch 32 ragt, wobei die miteinander fluchtenden Löcher durch einen Stift 52 zu einem Drehgelenk 34 miteinander vereint sind.

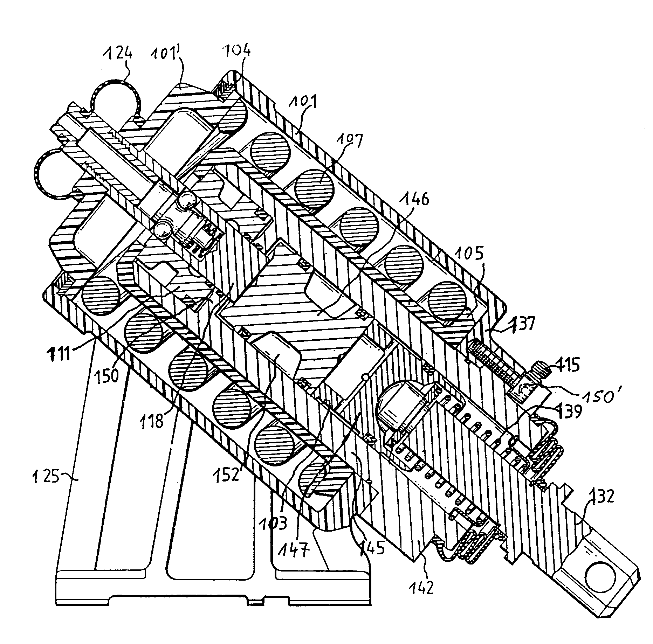

Fig. 3 geht aus von einem Federspeicher, wie er in der DE-OS 28 40 836 offenbart ist und macht diese Literaturstelle ausdrücklich zum Inhalt der vorliegenden Offenbarung. Der erfindungsgemäße Federspeicher wird also nur insoweit beschrieben, wie dies zur Erläuterung der erfinderischen Merkmale über den Inhalt der DE-OS 28 40 836 hinausgehend notwendig ist.

In Fig. 3 ist ein Gehäuse 101 des Federspeichers gezeigt, dessen Stirnseite 101' durch einen Sprengring 104 gehalten das Gehäuse an seinem durchgehend offenen Ende verschließt. Der wesentliche Unterschied zu der bekannten Ausführung besteht nun darin, daß das Federgehäuse 101 einen nach innen gerichteten umlaufenden Rand als Anschlag 137 besitzt, gegen den der sich in der Zeichnung von schräg oben vor dem Schließen der Stirnseite 101' eingeführte Federtopf 105 legt, der zusammen mit der Spannfeder 107 eingeführt wird. Es zeigt sich, daß die Spannfeder 107 mit mehreren Tonnen vorgespannt werden muß, damit die Stirnseite 101' in ihre Verschlußlage gebracht und durch den Sprengring 104 verschlossen werden kann, über den zusätzlich noch eine Dichtung eingefügt wird.

Man erhält somit eine Grundeinheit, die aus dem Gehäuse 101, der Stirnseite 101' und dem Federtopf 105 samt der vorgespannten Feder 107 besteht. Diese Grundeinheit ist vormontiert und braucht bei der Reparatur von Hydraulikbauteilen nicht mehr zu demontiert werden.

In die genannte Grundeinheit wird nun ein Hydraulikteil eingefügt, welches im wesentlichen durch den Einsatzzylinder 145 begrenzt ist. An dem in der Zeichnung oberen Ende des Hydraulikteils ist der an sich bekannte Spannkolben 111 angeordnet, der durch die Reibkraft seiner Dichtflächen an der Innenwand des Einsatzzylinders 145 gehalten wird, so daß sich beim Einführen des mit dem Spannkolben 111 versehenen Einsatzzylinders 145 keine Schwierigkeiten ergeben. Entsprechendes gilt für den Stößel 118, welcher ebenfalls über die Reibung der Dichtflächen sowohl von einer umlaufenden Konsole 150 des Einsatzzylinders 145, als auch der Innenfläche des Spannkolbens 111 gehalten ist. Auf diese Weise läßt sich also von rechts unten nicht nur der Einsatzzylinder 145 nebst den darin enthaltenen hydraulischen Baugruppen, sondern auch der Spannkolben 111 und der Stößel 118 in die Grundeinheit kraftfrei einführen. Beim Einführen gelangt schließlich der Stößel 118 in seine in der Zeichnung dargestellte Position, in der eine umlaufende Kante des Stößels 118 gegen eine umlaufende Kante der Stirnseite 101' anschlägt. Anschließend wird eine elastische Schutzkappe 124 mit ihrem einen Ende an dem Stößel 118 und mit ihrem anderen Ende an der Stirnseite 101' des Gehäuses 101 verbunden. Das in der Zeichnung obere Ende des Stößels 118 ist in der einfachen Form wie in Fig. 1 und 3 des aus der DE-OS 28 40 836 bekannten Federspeichers dargestellt, kann aber auch den geteilten Aufbau mit einem gesonderten Kolben (dort Kolben 29) haben, wie dort in Fig. 2 dargestellt. Dieser Kolben dient zum Auslösen der Speicherfeder 107 durch hydrostatischen Druck, so daß auf einen in der Zeichnung nicht dargestellten, aber notwendigen Auslösehebel (siehe Hebel 26 bei den bekannten Speichern) verzichtet werden kann. Einzelheiten zu der Wirkungsweise des Spannkolbens 111 und zur Betätigung des Betätigungsstößels 118 sowie seine Auslösung und der Wirkung der Spannfeder 107 in dem Federtopf 105 kann der DE-OS 28 40 836 entnommen werden.

Innerhalb des Einsatzzylinders 145 ist nun noch eine in der Zeichnung von unten bis zu der Konsole 150 ragende durchgehende Öffnung 103 zu sehen, in der hintereinanderliegend ein Kolben 146, ein Kolben 147 sowie eine Druckstange 132 angeordnet sind. Die Wirkungsweise dieser Bauelemente entspricht wiederum der Wirkungsweise der entsprechenden Bauelemente in der zuletzt genannten Literaturstelle, wobei der notwendige Druck über den Anschluß 115 zugeführt wird. Über einen Sprengring und einen Federteller ist über eine Feder 139 die Druckstange 132 zum Kolben 147 hin federnd abgestützt. Der Kolben 146 besitzt gegenüber dem entsprechenden Kolben bei dem bekannten Federspeicher eine umlaufende Ausnehmung 152, die der Gewichtsersparnis dient und die Wirkung des Kolbens ändert sich hierdurch nicht.

Wichtig für die Erfindung ist es, daß der Einsatzzylinder 145 mittels eines umlaufenden Ansatzes 142 auf einen umlaufenden, nach innen ragenden Anschlag 137 des Gehäuses 101 sitzt und mit diesem über Schrauben 150' lösbar verschraubt ist. Beim Lösen und Herausnehmen des Einsatzzylinders 145 ändert sich, wie aus der Zeichnung ohne weiteres ersichtlich ist, die Lage und der Zustand der vorgespannten Feder 107 nicht, die sich mit der oberen Kante des Federtopfes 105 nach wie vor gegen den gehäusefesten Anschlag 137 des Gehäuses 101 legt. Somit können ohne Schwierigkeiten die im oder an dem Einsatzzylinder angeordneten hydraulischen Bauelemente, einschließlich des Betätigungsstößels, gegenüber der vorgespannten Feder 107 rückwirkungsfrei herausgenommen, demontiert und wieder montiert werden. Entsprechendes gilt, wenn der Einsatzzylinder zusätzlich zu einer Nachstelleinrichtung auch noch mit einer Zweikreishydraulik, einer Federspeicherhydraulik, hydraulisch-mechanischen Schnellösevorrichtungen sowie dem Betätigungsgestänge nebst Nachstellung und einem Hubkontrollsensor versehen sind und der Einsatz mit diesen Elementen montiert wird und demontiert werden soll.

Der Federspeicher ist in der gezeigten schräg nach unten weisenden Lage auf einem Lagerbock 125 montiert, welcher an das Gehäuse 101 angeschweißt oder mit diesem einstückig gegossen ist.

## Patentansprüche

1. Mit einer Bremse (2) und einem auf diese einwirkenden Federspeicher (14) versehene Bremsanlage, bei der die Bremse (2) mit dem Getriebeblock (8,10) und der Federspeicher (14) unmittelbar mit dem Gehäuse der Bremse (2) verbunden ist, dadurch **gekennzeichnet,** daß der Federspeicher (14) direkt auf einen Betätigungshebel (24) der Bremse (2) einwirkt.

2. Bremsanlage nach Anspruch 1, dadurch **gekennzeichnet,** daß die Bremse (2) eine an sich bekannte Vollscheibenbremse ist, bei der die Drehbewegung einer Kugeldruckplatte die Belagscheiben in Reibeingriff mit der Bremsscheibe (26) bringt, wobei die Kugeldruckplatte mit einem Hebel (24) versehen ist, an dem der Stößel (28) des Federspeichers (14) im Sinne einer Drehbewegung der Kugeldruckplatte angreift.

3. Bremsanlage nach Anspruch 2, dadurch **gekennzeichnet,** daß der Stößel (28) mit einer Lochgabel (30) versehen ist und der Hebel (24) ein Ösenloch (32) aufweist, wobei die Löcher der Gabel (30) mit dem Ösenloch (32) fluchten und daß die miteinander verstifteten Löcher das Drehgelenk (34) bilden.

4. Bremsanlage nach einem der Ansprüche 1 bis 3, dadurch **gekennzeichnet,** daß zumindest eine ringförmige Seitenfläche (36) des Bremsgehäuses (37) mit im wesentlichen radial verlaufenden Rippen versehen ist.

5. Bremsanlage nach einem der Ansprüche 1 bis 4, dadurch **gekennzeichnet,** daß an der Mantelfläche (35) des Bremsgehäuses (37) ein oder mehrere ein Gewinde aufweisende Ansätze (42,44) vorgesehen sind, mit denen der Lagerbock (46) des Federspeichers (14) verschraubt ist.

6. Bremsanlage nach Anspruch 5, dadurch **gekennzeichnet,** daß der Federspeicher (14) zur Befestigungsebene des Lagerbocks (46) im Winkel von etwa 45° geneigt angeordnet ist.

7. Bremsanlage nach Anspruch 5 oder 6, dadurch **gekennzeichnet,** daß in einem der Ansätze (42,44) und in den Lagerbock (46) ein Paßstift (48) oder Paßfeder eingefügt ist, der zur Justage der Lage von Federspeicher (14) und Bremse (2) zueinander und zur Aufnahme von Scherkräften zwischen dem Federspeicher (14) und der Bremse (2) dient.

8. Bremsanlage nach einem der Ansprüche 1 bis 7, dadurch **gekennzeichnet**, daß das Bremsgehäuse mit einem ringförmigen Ansatz (60) versehen ist zur Aufnahme eines Getriebeauflagers.

9. Bremsanlage nach einem der vorangegangenen Ansprüche, dadurch **gekennzeichnet**, daß der Federspeicher zur Bremsbetätigung mit einem druckmittelbetätigbaren Spannkolben (111) zum Spannen einer Speicherfeder (107) versehen ist, daß der Spannkolben (111) über eine lösbare Kupplung mit einem Betätigungsstößel (118) verbunden ist, daß die Speicherfeder (107) über einen in die Speicherfeder (107) ragenden Federtopf (105) am Spannkolben (111) abgestützt ist, daß der Spannkolben (111) in einem gehäusefesten, in den Federtopf (105) ragenden Einsatz verschiebbar geführt ist, welcher Einsatz eine koaxiale Öffnung (103) aufweist, in die der Betätigungsstößel (118) durch den Spannkolben (111) hindurch hineinragt, daß in der Öffnung ein zum Betätigungsstößel hin offener Zylinder mit einem Kolben (146) angeordnet ist, der durch Druckmittel und/oder durch den Betätigungsstößel (118) beaufschlagbar ist, daß am Kolben (146) auf der dem Betätigungsstößel (118) abgewandten Seite ein Bremsgestänge abgestützt ist, welches ggf. mit weiteren hydraulisch gesteuerten Vorrichtungen, wie beispielsweise einer Nachstellvorrichtung, versehen ist, wobei der Einsatz und der offene Zylinder baulich zu einem einstückigen Einsatzzylinder (145) derart lösbar in den Federtopf (105) eingesetzt sind, daß durch den Einsatzzylinder (145) gehalten, alle hydraulisch betätigbaren Baugruppen (z.B. 111,118,146,132) mit dem Einsatzzylinder (145) gemeinsam aus dem Federspeichergehäuse (101) heraushebbar sind.

10. Bremsanlage nach Anspruch 9, dadurch **gekennzeichnet**, daß das Federspeichergehäuse (101) an seinen dem Bremsgestänge (132) zugewandten Ende mit einem radial nach innen weisenden, vorzugsweise umlaufenden Anschlag (137) versehen ist, gegen welchen der Federtopf (105) sich abstützt.

11. Bremsanlage nach Anspruch 10, dadurch **gekennzeichnet**, daß ein vorzugsweise umlaufender Ansatz (142) des Einsatzzylinders (145) an dem Anschlag (137) anliegt und der Ansatz (142) mit dem Anschlag (137) lösbar verbunden, insbesondere verschraubt ist.

12. Bremsanlage nach einem der Ansprüche 9 bis 11, dadurch **gekennzeichnet**, daß der Federtopf (105) von der dem Anschlag (137) abgewandten Seite in das Federspeichergehäuse (101) eingesetzt ist.

13. Bremsanlage nach einem der Ansprüche 9 bis 12, dadurch **gekennzeichnet**, daß der Anschlag (137) einstückig mit dem Gehäuse (101) des Federspeichers verbunden, vorzugsweise herausgeformt ist.

14. Bremsanlage nach einem der Ansprüche 9 bis 13, dadurch **gekennzeichnet**, daß eine die mechanische Baugruppe enthaltende Grundeinheit (101,107,105,101',104) vormontierbar ist und als Kraftspeicher von einer kompletten Hydraulikeinheit ohne Hilfsmittel (hydraulische Presse) gelöst werden kann.

## Claims

1. A brake unit equipped with a brake (2) and a spring energy accumulator (14) acting upon it, wherein the brake (2) is coupled to the lateral transmission gear (8, 10) and the spring energy accumulator (14) is coupled directly to the housing of the brake (2),
**characterized** in that the spring energy accumulator (14) directly acts upon an actuating lever (24) of the brake (2).

2. A brake unit as claimed in claim 1,
**characterized** in that the brake (2) is an internal expanding clutch type disc brake known per se, wherein the rotary motion of a ball pressure plate causes the lining discs to move into frictional engagement with the brake disc (26), the ball pressure plate being provided with a lever (24) at which the rod (28) of the spring energy accumulator (14) makes catch in the sense of a rotary motion of the ball pressure plate.

3. A brake unit as claimed in claim 2,
**characterized** in that the rod (28) is furnished with a punched fork (30) and the lever (24) includes an eyehole (32), the holes of the fork (30) being in alignment with the eyehole (32), and in that the holes through which a pin extends form the swivel connection (34).

4. A brake unit as claimed in any one of the claims 1 to 3,
**characterized** in that at least one annular lateral surface (36) of the brake housing (37) is provided with ribs extending substantially in a radial direction.

5. A brake unit as claimed in any one of the claims 1 to 4,
**characterized** in that, at the peripheral surface (35) of the brake housing (37), one or more mounting pads (42, 44) having a thread are provided to which the bearing pedestal (46) of the spring energy accumulator (14) is screwed.

6. A brake unit as claimed in claim 5,
**characterized** in that the spring energy accumulator (14) is arranged in respect of the plane of attachment of the bearing pedestal (46) inclined at an angle of roughly 45°.

7. A brake unit as claimed in claim 5 or 6,
**characterized** in that a fitting key (48) or spring is inserted into any one of the mounting pads (42, 44) and into the bearing pedestal (46) which serves to adjust the position of spring energy accumulator (14) and brake (2) in relation to each other and to take up shearing forces between the spring energy accumulator (14) and the brake (2).

8. A brake unit as claimed in any one of the claims 1 to 7,
**characterized** in that the brake housing is provided with an annular attachment (60) to accommodate a transmission pedestal.

9. A brake unit as claimed in any one of the preceding claims,
**characterized** in that, for the purpose of brake application, the spring energy accumulator is furnished with a pressure-fluid-operable tensioning piston (111) to tension an accumulator spring (107), in that the tensioning piston (111) is coupled to a rod (118) through a disengaging coupling, in that the accumulator spring (107) is supported on the tensioning piston (111) through a spring retainer cup (105) projecting into the accumulator spring (107), in that the tensioning piston (111) is slidably guided in an insert formed fast with the housing and projecting into the spring retainer cup (105), which insert contains a coaxial through bore (103) into which the rod (118) extends through the tensioning piston (111), in that in the through bore a cylinder, open towards the rod, is arranged which includes a piston (146) adapted to be acted upon by pressure fluid and/or by the rod (118), in that at the piston (146) on the side remote from the rod (118) a brake linkage is supported which, if necessary, is furnished with further hydraulically controlled devices, such as for example, a readjusting device, the insert and the open cylinder being assembled to form a one-piece insert cylinder (145) and being detachably mounted to the spring retainer cup (105), and in that, retained by the insert cylinder (145), all hydraulically actuatable assemblies (e.g. 111, 118, 146, 132) along with the insert cylinder (145) can be lifted from the spring accumulator housing (101).

10. A brake unit as claimed in claim 9,
**characterized** in that, at its end close to the push rod (132), the spring accumulator housing (101) is provided with a radially inwardly directed, preferably circumferential, stop (137) against which the spring retainer cup (105) bears.

11. A brake unit as claimed in claim 10,
**characterized** in that a preferably circumferential shoulder (142) of the insert cylinder (145) abuts on the stop (137), and the shoulder (142) is detachably secured to the stop (137), in particular screwed to it.

12. A brake unit as claimed in any one of the claims 9 to 11,
**characterized** in that the spring retainer cup (105) is installed to the spring accumulator housing (101) from the side remote from the stop (137).

13. A brake unit as claimed in any one of the claims 9 to 12,
**characterized** in that the stop (137) is formed integral with the housing (101) of the spring accumulator, preferably, is shaped at it.

14. A brake unit as claimed in any one of the claims 9 to 13,
**characterized** in that a basic unit (101, 107, 105, 101', 104) comprising the mechanical assembly can be preassembled and, in the capacity of a force accumulator, can be detached from a complete hydraulic unit without auxiliary means (hydraulic press).

## Revendications

1. Système de freinage, pourvu d'un frein (2) et d'un accumulateur à ressort (14) exerçant son action sur ce dernier, dans lequel le frein (2) est rendu solidaire du bloc de transmission (8, 10) et l'accumulateur à ressort (14) est rendu solidaire directement du boîtier du frein (2), caractérisé en ce que l'accumulateur à ressort (14) exerce directement son action sur un lever d'actionnement (24) du frein (2).

2. Système de freinage selon la revendication 1, caractérisé en ce que le frein (2) est un frein à disque à deux faces de frottement, en soi connu, dans lequel le mouvement de rotation d'un plateau de pression à billes amène les garnitures en forme de disque en prise de frottement sur le disque de frein (26), le plateau de pression à billes étant pourvu d'un lever (24) sur lequel le poussoir (28) de l'accumulateur à ressort (14) exerce son action dans le sens d'un mouvement de pivotement du plateau de pression à billes.

3. Système de freinage selon la revendication 2, caractérisé en ce que le poussoir (28) est pourvu d'une fourche (30) à trous et le lever (24) comporte un trou formant oeillet (32), les trous de la fourche (30) étant situés dans l'alignement du trou en forme d'oeillet (32), et en ce que les trous, réunis entre eux par une broche, constituent l'articulation à charnière (34).

4. Système de freinage selon l'une des revendications 1 à 3, caractérisé en ce qu'au moins une surface latérale annulaire (36) du boîtier de frein (37) est pourvue de nervures qui s'étendent d'une manière pratiquement diamétrale.

5. Système de freinage selon l'une des revendications 1 à 4, caractérisé en ce que, sur la surface périphérique (35) du boîtier de frein (37), il est prévu une ou plusieurs parties en saillie (42, 44) qui comportent un taraudage et au moyen desquelles le support (46) de l'accumulateur à ressort (14) est vissé.

6. Système de freinage selon la revendication 5, caractérisé en ce que l'accumulateur à ressort (14) est disposé d'une manière inclinée en faisant un angle de 45° environ vis-à-vis du plan de fixation du support (46).

7. Système de freinage selon l'une des revendications 5 et 6, caractérisé en ce que, dans l'une des parties en saillie (42, 44) et dans le support (46), il est inséré un goujon d'ajustement (48) ou une clavette d'ajustement qui sert à ajuster la position de l'accumulateur à ressort (14) et du frein (2) l'un vis-à-vis de l'autre et à reprendre les forces de cisaillement s'exerçant entre l'accumulateur à ressort (14) et le frein (2).

8. Système de freinage selon l'une des revendications 1 à 7, caractérisé en ce que le boîtier de frein est pourvu d'une partie en saillie annulaire (60) destinée à recevoir un support de réducteur.

9. Système de freinage selon l'une des revendications précédentes, caractérisé en ce qu'en vue de l'actionnement du frein, l'accumulateur à ressort est pourvu d'un piston de mise sous contrainte (111) agencé de façon à pouvoir être actionné par un fluide sous pression et servant à mettre un ressort d'accumulateur (107) sous contrainte. en ce que le piston de mise sous contrainte (111) est relié à un poussoir d'actionnement (118) par l'intermédiaire d'un accouplement séparable, en ce que le ressort d'accumulateur (107) prend appui sur le piston de mise sous contrainte (111) par l'intermédiaire d'une coupelle de ressort (105) qui pénètre dans le ressort d'accumulateur (107). en ce que le piston de mise sous contrainte (111) est guidé, de façon à pouvoir s'y déplacer en translation, dans un élément d'insertion, fixe par rapport au boîtier, qui fait saillie dans la coupelle de ressort (105) et qui comporte un passage (103) de même axe dans lequel le poussoir d'actionnement (118) pénètre sous l'action du piston de mise sous contrainte (111), en ce que dans le passage, il est disposé un cylindre ouvert vers le poussoir d'actionnement et comportant un piston (146) qui est agencé de façon à être soumis à l'action d'un agent de pression et/ou à l'action du poussoir d'actionnement (118), en ce qu'une tige de frein, qui est éventuellement pourvue d'autres dispositifs à commande hydraulique, tels qu'un dispositif de réglage préalable, prend appui sur le piston (146), sur la face de ce dernier qui est tournée à l'opposé du poussoir d'actionnement (118), l'élément d'insertion et le cylindre ouvert étant mis en place d'une manière amovible dans la coupelle de ressort (105) en formant structurellement un cylindre d'insertion (145) d'une seule pièce, d'une façon telle qu'en étant maintenus par le cylindre d'insertion (145), tous les groupes structures pouvant être actionnés par voie hydraulique (par exemple 111, 118, 146, 132) peuvent être extraits du boîtier (101) de l'accumulateur de ressort en commun avec le cylindre d'insertion (145).

10. Système de freinage selon la revendication 9, caractérisé en ce qu'à son extrémité tournée vers la tige de frein (132), le boîtier (101) de l'accumulateur de ressort comporte une butée (137) qui est orientée radialement vers l'intérieur, de préférence d'une manière circonférentielle, et contre laquelle la coupelle de ressort (105) prend appui.

11. Système de freinage selon la revendication 10, caractérisé en ce qu'une partie épaulée (142), de préférence circonférentielle, du cylindre d'insertion (145) prend appui sur la butée (137) et en ce que la partie épaulée (142) est rendue solidaire de la butée (137) d'une manière séparable, notamment en étant vissée sur cette dernière.

12. Système de freinage selon l'une des revendications 9 à 11, caractérisé en ce que la coupelle de ressort (105) est mise en place dans le boîtier (101) de l'accumulateur de ressort par le côté situé à l'opposé de la butée (137).

13. Système de freinage selon l'une des revendications 9 à 12, caractérisé en ce que la butée (137) est reliée au boîtier (101) de l'accumulateur de ressort de façon à former un seul bloc, de préférence en étant réalisée au formage sur ce boîtier.

14. Système de freinage selon l'une des revendications 9 à 13, caractérisé en ce qu'une unité de base (101, 107, 105, 101', 104). contenant les groupes structurels mécaniques, est agencée de façon à pouvoir être préassemblée et peut, en tant qu'accumulateur de force, être séparée d'une unité hydraulique complète sans l'utilisation de moyens auxiliaires (presse hydraulique).
